# EUROPÄISCHE PATENTSCHRIFT

(11) **EP 0 989 051 B1**
(45) Veröffentlichungstag und Bekanntmachung des Hinweises auf die Patenterteilung: **18.02.2004**
(21) Anmeldenummer: 99116962.4
(22) Anmeldetag: 27.08.1999
(51) Int. Cl.: B62D 21/15, B60J 5/04

(54) **Rohbaukarosserie für ein Kraftfahrzeug**
Car body for a motor vehicle
Carrosserie d'un véhicule automobile

(30) Priorität: 26.09.1998 DE 19844216
(43) Veröffentlichungstag der Anmeldung: 29.03.2000
(73) Patentinhaber: DaimlerChrysler AG, 70567 Stuttgart (DE)
(72) Erfinder: Braitmaier, Klaus, 71083 Herrenberg (DE)

(56) Entgegenhaltungen:
- FR-A- 2 745 241
- US-A- 2 036 610
- US-A- 4 018 475

## Beschreibung

Die Erfindung betrifft eine Rohbaukarosserie für ein Kraftfahrzeug mit wenigstens einem beweglichen und längs einer Aufprallbelastungsrichtung angeordneten Karosserieteil sowie mit stationären Karosserieabschnitten, die das bewegliche Karosserieteil etwa in der Flucht der Aufprallbelastungsrichtung vor und hinter diesem flankieren, wobei sowohl das wenigstens eine bewegliche Karosserieteil als auch die flankierenden Karosserieabschnitte jeweils aus einer Außenschale und einer Innenschale aufgebaut sind, die in Aufprallbelastungsrichtung ausgerichtet sind, wie aus US 4 018 475 A offenbart wird.

Personenkraftwagen mit selbsttragenden Rohbaukarosserien sind allgemein bekannt. Der Rohbaukarosserie eines solchen Personenkraftwagens sind zum einen wenigstens zwei Seitentüren und üblicherweise - im Falle eines Kombi-Personenkraftwagens - eine schwenkbewegliche Heckklappe zugeordnet. Die Seitentüren und die Heckklappe stellen bewegliche Karosserieteile dar, die durch stationäre Karosserieabschnitte der Rohbaukarosserie, insbesondere durch A- und B-Säulen bzw. durch Hecksäulen, flankiert sind. Bei einem starken, in Fahrzeuglängsrichtung wirkenden Fahrzeugaufprall, d.h. bei einem Frontalaufprall oder einem Heckaufprall, besteht unter Umständen die Gefahr, daß die Seitentüren nicht mehr ohne weiteres geöffnet werden können. In solchen Fällen kann es notwendig sein, daß in aufwendiger Weise Schneidwerkzeuge eingesetzt werden müssen, um Fahrzeuginsassen aus dem Fahrzeug bergen zu können. Insbesondere bei schwerverletzten Fahrzeuginsassen geht durch solche Maßnahmen wertvolle Zeit verloren. Ein ähnlich gelagerter Fall kann auftreten, falls sich bei einem Seitenaufprall in einem Heckbereich des Kraftfahrzeugs die Heckklappe nicht mehr öffnen läßt und gegebenenfalls Fahrzeüginsassen auf einer dritten Sitzbank in einem Laderaum des Kombi-Personenkraftwagens geborgen werden müssen.

Aufgabe der Erfindung ist es, eine Rohbaukarosserie der eingangs genannten Art zu schaffen, die auch bei einem starken Fahrzeugaufprall eine schnelle Bergung von Fahrzeuginsassen ermöglicht.

Diese Aufgabe wird dadurch gelöst, daß die Außenschale des beweglichen Karosserieteiles deformationssteif und die zugehörige Innenschale zumindest abschnittsweise deformierbar - jeweils in Aufprallbelastungsrichtung gesehen - gestaltet sind, und daß bei wenigstens einem flankierenden Karosserieabschnitt entsprechend umgekehrt die Außenschale zumindest abschnittsweise deformierbar und die Innenschale deformationssteif ausgeführt sind. Dadurch wird gewährleistet, daß das bewegliche Karosserieteil sich nicht derart formschlüssig mit den angrenzenden Karosserieabschnitten verkeilen kann, daß ein Öffnen des Karosserieteiles nicht mehr ermöglicht wird. Die Erfindung geht von der Erkenntnis aus, daß die Schwierigkeiten beim Öffnen von durch einen Frontalaufprall oder einen Heckaufprall deformierten Seitentüren auf eine formschlüssige Verkeilung insbesondere im Türschloßbereich zwischen Seitentür und entsprechender Rohbautragsäule zurückzuführen sind. Durch die Versteifung der Außenschale des beweglichen Karosserieteiles und die gleichzeitig deformationsweiche Gestaltung der fluchtenden Außenschale des zumindest einen benachbarten Karosserieabschnittes und entsprechender umgekehrter Deformierbarkeit der Innenschale des beweglichen Karosserieteiles und der Deformationssteifigkeit der benachbarten Innenschale des stationären Karosserieabschnittes kann keine ein Öffnen des Karosserieteiles behindernde Verkeilung zwischen den benachbarten Stirnflächen von Karosserieteil und Karosserieabschnitt auftreten. Die Stirnflächen werden sich bei der Deformation vielmehr derart drehen, daß sich gegenüber dem ursprünglich rechten Winkel ein auf die Öffnungsrichtung des Karosserieteiles bezogener offener Winkel ergibt.

In Ausgestaltung der Erfindung sind einander benachbarte und quer zur Aufprallbelastungsrichtung verlaufende sowie jeweils Außen- und Innenschale stirnseitig miteinander verbindende Stoßabschnitte des wenigstens einen Karosserieteiles und der stationären Karosserieabschnitte deformationssteif ausgeführt. Dadurch wird gewährleistet, daß diese die Stirnflächen bildenden Stoßabschnitte bei einem entsprechenden Fahrzeugaufprall einer definierten Kinematik unterworfen sind und die gewünschte Schrägstellung und Drehung aufgrund der unterschiedlichen Deformationen von Außen- und Innenschale zuverlässig durchführen.

Die Deformationssteifigkeit der Außen- und Innenschalen kann durch verschiedene Maßnahmen, insbesondere durch Erhöhung der Wandungsstärke der Außen- und Innenschalen, durch Wahl eines deformationssteifen Materials oder durch entsprechend verbundene oder integrierte Versteifungsstrukturen, Versteifungsschalen oder -platten erzielt werden.

Die Deformierbarkeit der verbleibenden Innen- und Außenschalen kann in analoger Weise durch eine Verringerung der Wandstärke oder auch durch eine wenigstens abschnittsweise geschwächte Formgebung in Form von Sollknickstellen, Anfaltsicken oder ähnlichem oder auch durch Auswahl eines geeigneten, deformationsfähigen Materials erzielt werden. In allen Fällen soll der Begriff der Deformierbarkeit die plastische Deformierbarkeit bedeuten, bei der durch die Deformation zusätzlich noch Energie abgebaut werden kann.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Draufsicht eine Ausführungsform einer erfindungsgemäßen Rohbaukarosserie eines zweitürigen Personenkraftwagens,
- Fig. 2: in vergrößerter Darstellung den Ausschnitt II der Rohbaukarosserie nach Fig. 1 im undeformierten Funktionszustand, und
- Fig. 3: den Ausschnitt der Rohbaukarosserie nach Fig. 2 im deformierten Endzustand.

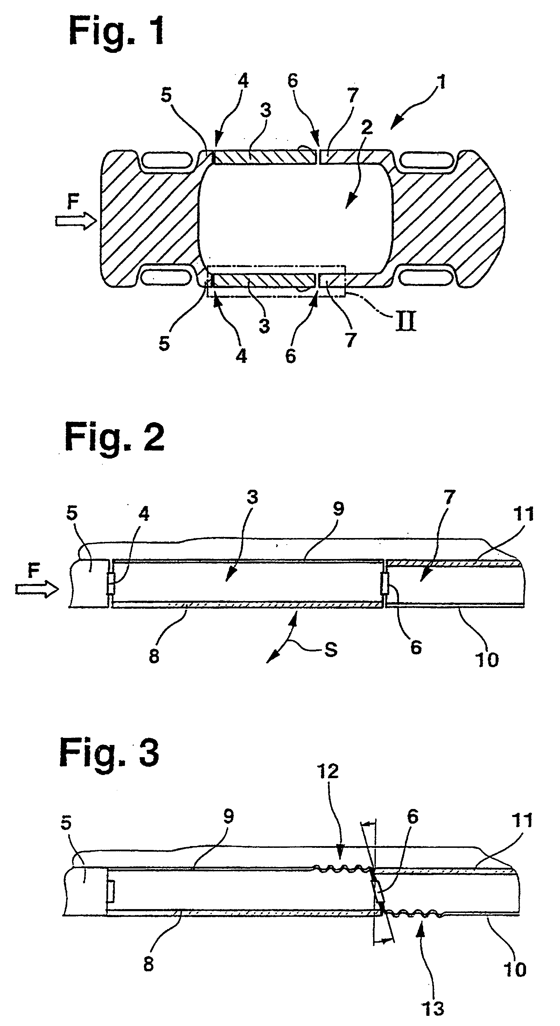

Ein Personenkraftwagen nach Fig. 1 soll in seiner schematischen Darstellung ein zweitüriges Coupé oder Cabriolet darstellen. Das nachfolgend beschriebene Deformationsverhalten von Seitentüren eines solchen Personenkraftwagens ist in gleicher Weise jedoch auch auf andere Kraftfahrzeuge mit selbsttragender Rohbaukarosserie übertragbar.

Der Personenkraftwagen weist eine selbsttragende Rohbaukarosserie 1 auf, die einen Fahrgastraum 2 umschließt. Die Rohbaukarosserie 1 weist im Bereich des Fahrgastraumes 2 auf gegenüberliegenden Seiten jeweils eine Seitentüre 3 auf, die in Fahrzeuglängsrichtung gesehen zwischen vorderen und hinteren Tragsäulen 5, 7 eingebettet ist. Dabei ist jede Seitentüre 3 mittels einer Scharnieranordnung 4 an der vorderen Tragsäule, auch als A-Säule 5 bezeichnet, schwenkbeweglich angelenkt. Mit der in Fahrzeuglängsrichtung gesehenen hinteren Tragsäule, auch als B-Säule 7 bezeichnet, ist jede Seitentür 3 in grundsätzlich bekannter Weise mittels eines Türschlosses 6 in seiner geschlossenen Position gehalten. Die einander zugewandten Stirnflächen der Seitentür 3 und der einen stationären Karosserieabschnitt bildenden B-Säule 7 verlaufen etwa parallel zueinander und etwa quer zur Fahrzeuglängsrichtung (Fig. 2). Diese Stirnflächen bilden Stoßabschnitte zwischen Seitentür 3 und B-Säule 7, da sie bei einem Frontalaufprall des Personenkraftwagens und einer entsprechenden Aufprallbelastung in Pfeilrichtung F im wesentlichen flächig gegeneinander in Kontakt geraten. Um zu vermeiden, daß aufgrund der Aufprallbelastung eines solchen Frontalaufpralls F, insbesondere bei einem seitlich versetzten Frontalaufprall, die entsprechend stark beaufschlagte Seitentür 3 in Pfeilrichtung S nicht mehr einwandfrei geöffnet werden kann, ist jeder Seitentür 3 ein definiertes Deformationsverhalten zugeordnet, das eine definierte Kinematik für die Stoßabschnitte von Seitentür 3 und B-Säule 7 bewirkt.

Dazu weist die Seitentür 3, die wie auch die angrenzenden Karosserieabschnitte 5, 7 zweischalig gestaltet ist, eine Außenschale 8 auf, die gegenüber einer Innenschale 9 deformationssteif gestaltet ist. Entsprechend umgekehrt weist der die B-Säule bildende Karosserieabschnitt eine deformationsweiche, d.h. deformierbare Außenschale 10 und eine deformationssteife Innenschale 11 auf, wobei die Außen- und Innenschalen 8, 10; 9, 11 von Seitentür 3 und Karosserieabschnitt 7 in Aufprallbelastungsrichtung F jeweils miteinander fluchten. Beim dargestellten Ausführungsbeispiel ist die Deformationssteifigkeit der Außenschale 8 und der Innenschale 11 durch Erhöhung der Wandungsstärke gegenüber der Wandungsstärke der Innenschale 9 bzw. der Außenschale 10 erzielt. Um im Deformationsverhalten der Seitentür 3 und des Karosserieabschnittes 7 einen definierten Unterschied zwischen der jeweils deformationssteifen Schale und der gegenüberliegenden, deformierbaren Innenschale erzielen, ist beim dargestellten Ausführungsbeispiel die Innenschale 9 in einem Deformationsbereich 12 ergänzend noch mit schwächenden Formgebungen in Form von nicht näher dargestellten Sollknickstellen oder Anfaltsicken versehen. In gleicher Weise weist die Außenschale 10 in einem Deformationsbereich 13 eine entsprechend geschwächte Formgebung auf.

Beim dargestellten Ausführungsbeispiel ist die den vorderen Karosserieabschnitt bildende A-Säule 5 bezüglich Außen- und Innenschale identisch gestaltet, so daß über Außen- und Innenschale der A-Säule 5 gleiche Kräfte in die Außenschale 8 und die Innenschale 9 der Seitentür eingeleitet werden. Dadurch wird gewährleistet, daß die Funktion der Scharnieranordnung 4 nicht beeinträchtigt ist. Je nach Gestaltung der Scharnieranordnung 4 könnte jedoch auch bei der A-Säule 5 die Außenschale deformierbar und die Innenschale deformationssteif gestaltet sein, da sich auch durch eine solche ergänzende Maßnahme eine offene Schrägstellung der Stoßabschnitte zwischen Seitentür 3 und A-Säule 5 ergibt, die ein Öffnen der Seitentür 3 erleichtert.

Wie anhand der Fig. 3 erkennbar ist, deformieren sich nach entsprechenden Belastungen in Pfeilrichtung F aufgrund eines Frontalaufpralls die Deformationsbereiche 12, 13, indem die Innenschale 9 der Seitentür 3 und die Außenschale 10 des Karosserieabschnittes 7 entweder nur in den Deformationsbereichen 12, 13 oder aber insgesamt gestaucht werden. Die Außenschale 8 der Seitentür 3 und die Innenschale 11 des Karosserieabschnittes 7 behalten ihre Form im wesentlichen bei, so daß sich zwangsläufig eine Drehung und Schrägstellung der Anlagefläche der Stoßabschnitte zwischen Seitentür 3 und Karosserieabschnitt 7 gemäß den strichpunktiert und mit Pfeilen gekennzeichneten Linien ergibt. Die Drehung erfolgt im wesentlichen um eine vertikale Hochachse, die das Türschloß 6 durchdringt. Dem Fachmann ist klar, daß hierdurch lediglich der prinzipielle Verlauf von Drehungen und Achsen definiert wird. In der Praxis können sich Abweichungen ergeben, ohne daß jedoch das Funktionsprinzip verlassen wird. Wie anhand der Fig. 3 erkennbar ist, dreht sich die gemeinsame Anlagefläche des Stoßabschnittes zwischen Seitentür 3 und Karosseriabschnitt 7 im Türschloßbereich 6 derart, daß sich ein auf die Fahrzeuglängsrichtung bezogen offener Winkel ergibt, der in jedem Fall eine formschlüssige Verkeilung zwischen Seitentür 3 und Karosserieabschnitt 7 - auf die Fahrzeugquerrichtung bezogen - vermeidet. Die gleiche Funktion wie bei einer Erhöhung der Wandungsstärke wird für die Erzielung einer ausreichenden Deformationssteifigkeit dadurch geschaffen, daß mit den jeweiligen Außen- oder Innenschalen entsprechende Versteifungsschalen oder -platten nach Art einer Materialdopplung oder -vervielfachung verbunden werden.

## Patentansprüche

1. Rohbaukarosserie für ein Kraftfahrzeug mit wenigstens einem beweglichen und längs einer Aufprallbelastungsrichtung angeordneten Karosserieteil sowie mit stationären Karosserieabschnitten, die das bewegliche Karosserieteil etwa in der Flucht der Aufprallbelastungsrichtung vor und hinter diesem flankieren, wobei sowohl das wenigstens eine bewegliche Karosserieteil als auch die flankierenden Karosserieabschnitte jeweils aus einer Außenschale und einer Innenschale aufgebaut sind, die in Aufprallbelastungsrichtung ausgerichtet sind,
**dadurch gekennzeichnet,**
**daß** die Außenschale (8) des beweglichen Karosserieteiles (3) deformationssteif und die zugehörige Innenschale (9) zumindest abschnittsweise deformierbar - jeweils in Aufprallbelastungsrichtung F gesehen - gestaltet sind, und daß bei wenigstens einem flankierenden Karosserieabschnitt (7) entsprechend umgekehrt die Außenschale (10) zumindest abschnittsweise deformierbar und die Innenschale (11) deformationssteif ausgeführt sind.

2. Rohbaukarosserie nach Anspruch 1,
**dadurch gekennzeichnet,**
**daß** einander benachbarte und quer zur Aufprallbelastungsrichtung verlaufende sowie Außen- und Innenschale (8, 9; 10, 11) stirnseitig miteinander verbindende Stoßabschnitte des wenigstens einen Karosserieteiles (3) und der stationären Karosserieabschnitte (7) deformationssteif ausgeführt sind.

3. Rohbaukarosserie nach Anspruch 1,
**dadurch gekennzeichnet,**
**daß** die deformationssteifen Außen- und Innenschalen (8, 11) durch Erhöhung der Wandungsstärke geschaffen sind.

4. Rohbaukarosserie nach Anspruch 1,
**dadurch gekennzeichnet,**
**daß** die Deformationssteifigkeit der Außen- und Innenschalen durch Wahl eines deformationssteifen Materials geschaffen ist.

5. Rohbaukarosserie nach Anspruch 1,
**dadurch gekennzeichnet,**
**daß** die Deformationssteifigkeit der Außen- und Innenschalen durch flächig mit diesen verbundene Versteifungsschalen oder - platten geschaffen ist.

6. Rohbaukarosserie nach Anspruch 1,
**dadurch gekennzeichnet,**
**daß** die Deformationssteifigkeit der Außen- und Innenschalen durch eine tragwerkartige Versteifungsstruktur für die jeweilige Außen- oder Innenschale geschaffen ist.

7. Rohbaukarosserie nach Anspruch 1,
**dadurch gekennzeichnet,**
**daß** die Deformierbarkeit der Innen- und Außenschalen (9, 10) durch Verringerung der Wandstärke gegenüber den deformationssteifen Außen- und Innenschalen (8, 11) geschaffen ist.

8. Rohbaukarosserie nach Anspruch 1,
**dadurch gekennzeichnet,**
**daß** die Deformierbarkeit der Außen- und Innenschalen durch wenigstens abschnittsweise geschwächte Formgebung wie Sollknickstellen, Anfaltsicken oder ähnlichem geschaffen ist.

9. Rohbaukarosserie nach Anspruch 1,
**dadurch gekennzeichnet,**
**daß** die Deformierbarkeit der Innen- und Außenschalen durch Wahl eines in geeigneter Weise plastisch deformierbaren Materials geschaffen ist.

## Claims

1. Carcase work car body for a vehicle with at least one car body section that is disposed, such that it is mobile along a direction of impact loading, and with stationery car body sections that flank, to the front and to the rear, the mobile car body section in the flow of the direction of impact loading, whereby both the at least one mobile car body section and also the flanking car body sections are constructed in each case from an outer shell and an inner shell, that are aligned in the direction of impact loading,
**characterized in that**
the outer shell (8) of the mobile car body section (3) is non-yielding with regard to deformation and the associated inner shell (9) is at least deformable in part, in both cases, in the direction of impact loading F, and **in that** in at least one flanking car body section (7), the reverse is true with the outer shell (10) being deformable at least in part and the inner shell (11) being non-yielding.

2. Carcase work car body in accordance with claim 1,
**characterized in that**
impact sections of the at least one car body section (3), and of the stationary car body sections (7), which are adjacent to each other and run transversely in relation to the direction of impact loading, and which connect the outer and inner shells (8, 9; 10, 11) at the front end, are non-yielding with regard to deformation.

3. Carcase work car body in accordance with claim 1,
**characterized in that**
the inner and outer shells (8, 11) that are non-yielding with regard to deformation are made by increasing their thickness.

4. Carcase work car body in accordance with claim 1,
**characterized in that**
the deformational rigidity of the outer and inner shells is effected through the selection of a material that is non-yielding with regard to deformation.

5. Carcase body in accordance with claim 1,
**characterized in that**
the deformational rigidity of the outer and inner shells is effected through reinforcing shells or plates that are connected to surfaces of the said outer and inner shells.

6. Carcase work car body in accordance with claim 1,
**characterized in that**
the deformational rigidity of the outer and inner shells is produced by means of an underframe reinforcing structure for the given outer or inner shell.

7. Carcase work car body in accordance with claim 1,
**characterized in that**
the deformability of the outer and inner shells (9, 10) is produced by reducing their thickness in relation to the deformation-rigid outer and inner shells (8, 11).

8. Carcase work and car body in accordance with claim,
**characterized in that**
the deformability of the outer and inner shells is produced through at least sectional weakening such as kink-points, folding seams or corrugations or suchlike.

9. Carcase work car body in accordance with claim 1,
**characterized in that**
the deformability of the inner and outer shells is produced through the selection of material that deforms in an appropriate way.

## Revendications

1. Ebauche de carrosserie pour un véhicule automobile avec au moins une partie de carrosserie mobile disposée le long d'une direction de mise en contrainte en cas d'impact ainsi qu'avec des tronçons de carrosserie stationnaires, qui se trouvent des deux côtés de la partie de carrosserie mobile devant et derrière celle-ci et à peu près dans l'alignement de la direction de mise en contrainte en cas d'impact, aussi bien l'au moins une partie de carrosserie mobile que les tronçons de carrosserie se trouvant des deux côtés de celle-ci étant constitués respectivement d'une coquille extérieure et d'une coquille intérieure, qui sont orientées dans la direction de mise en contrainte en cas d'impact, **caractérisée en ce que** - respectivement dans une vue selon la direction de mise en contrainte en cas d'impact F - la coquille extérieure (8) de la partie de carrosserie mobile (3) est rigide en déformation et la coquille intérieure correspondante (9) est déformable au moins par tronçons et **en ce qu'**à l'inverse, pour au moins un tronçon de carrosserie se trouvant des deux côtés (7), la coquille extérieure (10) est déformable au moins par tronçons et la coquille intérieure (11) est rigide en déformation.

2. Ebauche de carrosserie selon la revendication 1, **caractérisée en ce que** des tronçons d'impact de l'au moins une partie de carrosserie (3) et des tronçons de carrosserie stationnaires, qui sont voisins entre eux, qui s'étendent perpendiculairement à la direction de mise en contrainte en cas d'impact et qui relient entre elles du côté frontal la coquille extérieure et la coquille intérieure (8, 9 ; 10, 11), sont rigides en déformation.

3. Ebauche de carrosserie selon la revendication 1, **caractérisée en ce que** les coquilles extérieures et les coquilles intérieures rigides en déformation (8, 11) sont réalisées à l'aide d'un accroissement de l'épaisseur des parois.

4. Ebauche de carrosserie selon la revendication 1, **caractérisée en ce que** la rigidité en déformation des coquilles extérieures et des coquilles intérieures est obtenue par le choix d'un matériau rigide en déformation.

5. Ebauche de carrosserie selon la revendication 1, **caractérisée en ce que** la rigidité en déformation des coquilles extérieures et des coquilles intérieures est obtenue par des coquilles ou des plaques de raidissement reliées par l'intermédiaire de leurs surfaces avec celles-ci.

6. Ebauche de carrosserie selon la revendication 1, **caractérisée en ce que** la rigidité en déformation des coquilles extérieures et des coquilles intérieures est obtenue par une structure de raidissement de type porteur pour la coquille extérieure ou pour la coquille intérieure respective.

7. Ebauche de carrosserie selon la revendication 1, **caractérisée en ce que** la déformabilité des coquilles intérieures et des coquilles extérieures (9, 10) est obtenue par une diminution de l'épaisseur de paroi par rapport aux coquilles extérieures et aux coquilles intérieures rigides en déformation (8, 11).

8. Ebauche de carrosserie selon la revendication 1, **caractérisée en ce que** la déformabilité des coquilles extérieures et des coquilles intérieures est obtenue par une mise en forme fragilisée au moins par tronçons, telle que des points de flexion prédéterminés, des moulures de déformation ou des éléments similaires.

9. Ebauche de carrosserie selon la revendication 1, **caractérisée en ce que** la déformabilité des coquilles intérieures et des coquilles extérieures est obtenue par le choix d'un matériau pouvant être soumis d'une manière appropriée à une déformation plastique.
